# EUROPEAN PATENT APPLICATION

(11) **EP 4 607 062 A1**
(43) Date of publication of application: **27.08.2025**
(21) Application number: 23879408.5
(22) Date of filing: 13.07.2023
(51) Int. Cl.: F16H 25/20, B60T 13/74, F16H 25/24, H02K 7/06

(54) **ELECTRIC ACTUATOR AND ELECTRIC PARKING BRAKE DEVICE**

(30) Priority: 17.10.2022 JP 2022166512
(71) Applicant: Astemo, Ltd., Tokyo 100-0004 (JP)
(72) Inventor: USUI, Koji, Hitachinaka-shi, Ibaraki 312-8503 (JP)
(74) Representative: Hoffmann Eitle
(86) International application number: PCT/JP2023/025805
(87) International publication number: WO 2024/084754

(57) **Abstract**

Provided is an electric actuator which has fewer movable portions of a motion conversion mechanism so that slapping sound less liable to occur at the time of operation of an electric drive unit, and hence has quietness. An electric actuator includes: an electric driving source configured to generate a rotational motion as a driving force; and a motion conversion mechanism configured to convert the rotational motion to a rectilinear motion. The motion conversion mechanism includes: a first member configured to be blocked to execute a rotational motion and a rectilinear motion; and a second member configured to engage with this first member to relatively rotate with respect to this first member, to thereby generate a rectilinear motion. This second member is configured to be rotationally driven by the driving force of the electric driving source.

## Description

### TECHNICAL FIELD

The present invention relates to an electric actuator and an electric parking brake device including a parking brake mechanism operated by the electric actuator.

### BACKGROUND ART

An electric actuator in an electric parking brake device disclosed in Patent Literature 1 includes a motor and a motion conversion mechanism which converts a rotational driving force of this motor to a rectilinear motion. This motion conversion mechanism is formed of: a male thread member that is allowed to execute only the rectilinear motion, and is supported by an actuator case; and a female thread member supported by the actuator case such that the female thread member is allowed to execute only rotation while threadedly engaging with the male thread member. The rectilinear motion is generated to the male thread member by the male thread member being rotationally driven by the driving force of the motor.

### CITATION LIST

### PATENT LITERATURE

PTL 1: JP 5960534 B2

### SUMMARY OF INVENTION

### TECHNICAL PROBLEM

Incidentally, in the motion conversion mechanism in the electric actuator disclosed in Patent Literature 1, both the male thread member and the female thread member is required to generate the rotational motion or the rectilinear motion, and hence unavoidable play exists in a movable portion thereof. This play causes occurrence of slapping sound at the time of driving by the motor, that is, an electric drive unit.

The present invention has been made in view of the above-mentioned situation, and has an object to provide an electric actuator which has fewer movable portions of a motion conversion mechanism so that slapping sound is less liable to occur at the time of driving of an electric drive unit, and hence has quietness, and an electric parking brake device including a parking brake mechanism to be operated by the electric actuator.

### SOLUTION TO PROBLEM

In order to achieve the object described above, according to a first feature of the present invention, there is provided an electric actuator, including: an electric driving source configured to generate a rotational motion as a driving force; and a motion conversion mechanism configured to convert the rotational motion to a rectilinear motion. The motion conversion mechanism includes: a first member configured to be blocked to execute a rotational motion and a rectilinear motion; and a second member configured to engage with the first member to relatively rotate with respect to the first member, to thereby generate a rectilinear motion. The second member is configured to be rotationally driven by the driving force of the electric driving source. The electric driving unit corresponds to a motor 12 in an embodiment of the present invention, which is described later, and the first member and the second member correspond to a male thread tubular shaft 25 and a female thread tubular shaft 26, respectively.

Further, according to a second feature of the present invention, in addition to the first feature, the first member and the second member engage with each other through thread engagement.

In addition, according to a third feature of the present invention, in addition to the second feature, a lubricant reservoir that a thread portion of the first member faces is provided to the second member. The lubricant reservoir corresponds to a grease reservoir 28 in the embodiment of the present invention, which is described later.

Furthermore, according to a fourth feature of the present invention, in addition to any one of the first feature to the third feature, the first member is fixed to an actuator case that accommodates the motion conversion mechanism.

Furthermore, according to a fifth feature of the present invention, there is provided an electric parking brake device, including a parking brake mechanism configured to be brought into a braking state through an operation of an electric actuator. The electric actuator includes an electric driving source configured to generate a rotational motion as a driving force, and a motion conversion mechanism configured to convert the rotational motion to a rectilinear motion. The motion conversion mechanism includes a first member configured to be blocked to execute a rotational motion and a rectilinear motion, and a second member configured to relatively rotate with respect to the first member, to thereby generate a rectilinear motion. The second member is configured to be rotationally driven by the driving force of the electric driving source, to thereby bring the parking brake mechanism into the braking state.

Furthermore, according to a sixth feature of the present invention, in addition to the fifth feature, the second member is connected to the parking brake mechanism via a transmission member, and a bearing configured to allow a relative rotation between the second member and the transmission member is interposed therebetween. The transmission member corresponds to an output cable 14 in the embodiment of the present invention, which is described later.

Furthermore, according to a seventh feature of the present invention, in addition to the sixth feature, a hollow portion that allows the transmission member to be inserted therethrough is provided to the first member.

Furthermore, according to an eighth feature of the present invention, in addition to the sixth feature or the seventh feature, the second member and the transmission member are connected to each other via an elastic member. The elastic member corresponds to a disc spring 37 group in the embodiment of the present invention, which is described later.

According to the first feature of the present invention, of the first member and the second member which form the motion conversion mechanism, the rotational and rectilinear motions of the first member are blocked, and hence fewer movable portions are provided in the motion conversion mechanism, which can contribute to improvement in quietness of the electric actuator.

According to the second feature of the present invention, the first member and the second member threadedly engage with each other, and hence the second member itself can generate the rectilinear motion as a result of the rotational motion of the second member.

According to the third feature of the present invention, the thread portion of the first member faces the lubricant reservoir of the second member, to thereby lubricate the thread engagement portions of both of the members, resulting in enabling smooth thread engagement and rotation of the second member.

According to the fourth feature of the present invention, the first member is fixed to the case which accommodates the motion conversion mechanism including the first member, to thereby be capable of certainly blocking the rotational and rectilinear motions of the first member.

According to the fifth feature of the present invention, the electric parking brake device which is high in quietness can be provided.

According to the sixth feature of the present invention, the second member is connected to the parking braking mechanism via the transmission member, and the bearing which allows the relative rotation between the second member and the transmission member is interposed therebetween. Thus, the transmission of the rotational motion from the second member to the transmission member can be prevented.

According to the seventh feature of the present invention, the hollow portion through which the transmission member is inserted is provided to the first member, and hence the transmission member can be connected to the second member without interference by the first member.

According to the eighth feature of the present invention, when the parking brake mechanism is brought into the braking state by the rectilinear motion of the second member pulling the transmission member, a repulsive force is accumulated in the elastic member between the second member and the transmission member to thus suppress loosening of the parking brake mechanism and slack of the transmission member, to thereby be capable of stabilizing the braking state of the parking brake mechanism.

### BRIEF DESCRIPTION OF DRAWINGS

Fig. 1 is a longitudinal side view for illustrating an electric actuator according to a first embodiment of the present invention in a non-operation state.
Fig. 2 is a longitudinal side view for illustrating the electric actuator in an operation state.
Fig. 3 is an exploded perspective view for illustrating the electric actuator.
Fig. 4 shows a second embodiment of the present invention, and is a major-part longitudinal side view of the electric actuator in the operation state.
Fig. 5 is a longitudinal cross-sectional view of the major part of the electric actuator in the non-operation state.

### DESCRIPTION OF EMBODIMENTS

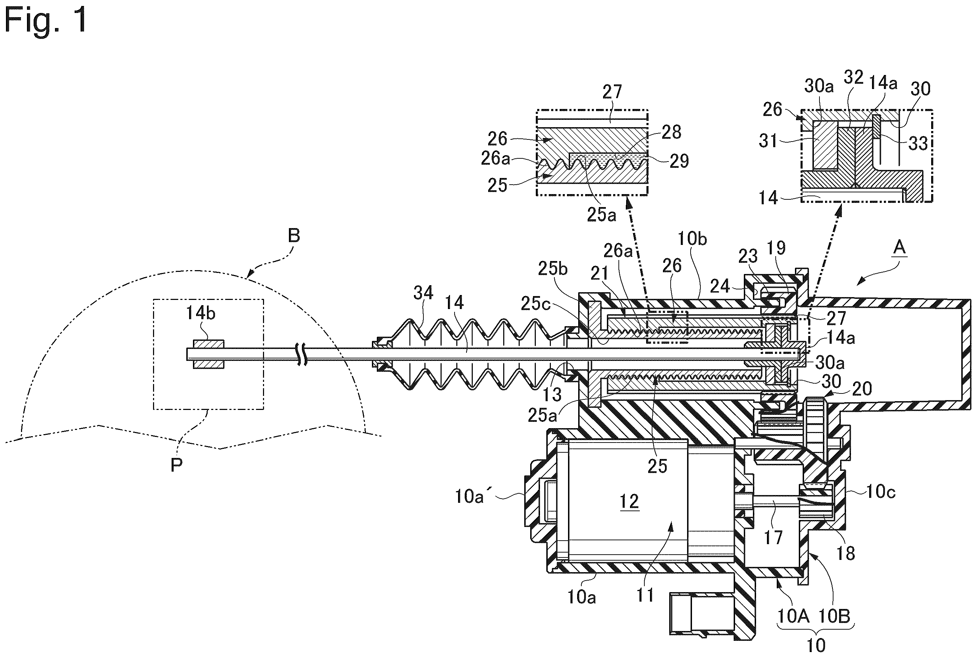

First, a first embodiment of the present invention of the present invention is described with reference to accompanying Fig. 1 to Fig. 3.

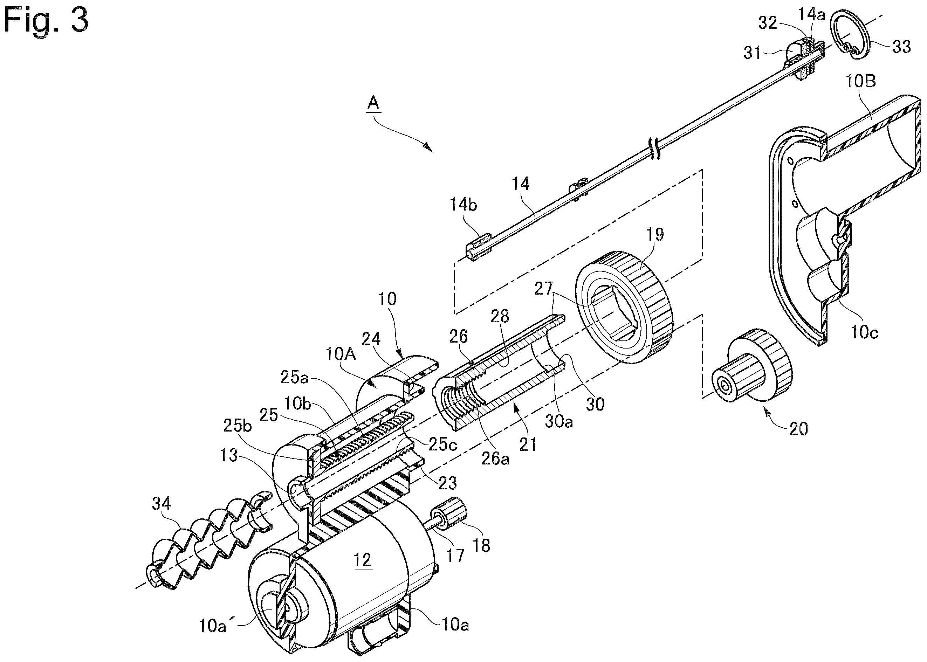

In Fig. 1 and Fig. 3, an electric actuator A is formed of an actuator case 10 and an actuator mechanism 11 accommodated therein. In this electric actuator A, an extension direction of an output cable 14, which is described later, from the actuator case 10 is set as a front direction, and an opposite direction thereof is set as a rear direction.

The actuator case 10 includes a motor case portion 10a in a cylindrical shape, an output case portion 10b in a cylindrical shape disposed in parallel to and next to the motor case portion 10a, and a gear case portion 10c which connects a rear end portion of the motor case portion 10a to a middle portion of the output case portion. A front end portion of the motor case portion 10a is formed as a detachable cap 10a'.

Moreover, this actuator case 10 is divided into: a case body 10A being a front half portion including a major part of the motor case portion 10a; and a case cover 10B being a rear half portion in order to enable assembly and disassembly of the actuator mechanism 11. The case body 10A and the case cover 10B are made of a synthetic resin.

The actuator mechanism 11 is formed of: a motor 12 which is accommodated in the motor case portion 10a; the output cable 14 which extends to the outside through a cable outlet 13 of a front end wall of the output case portion 10b; a speed reduction gear train 20 which is accommodated in the gear case portion 10c, and transmits a rotational driving force of a rotor shaft 17 of the motor 12 from a pinion gear 18 to a final gear 19 in a ring shape while reducing the speed of the rotational driving force; and a motion conversion mechanism 21 which is accommodated in the output case portion 10b, and converts the rotational motion of the final gear 19 to the rectilinear motion to transmit the rectilinear motion to the output cable 14.

The final gear 19 is rotationally supported by a tubular support shaft 23 integral with the output case portion 10b. Moreover, this final gear 19 is accommodated in a gear housing 24 in an arch shape of the output case portion 10b such that a motion of the final gear 19 in an axial direction is constrained.

The motion conversion mechanism 21 is formed of a male thread tubular shaft 25 and a female thread tubular shaft 26. The male thread tubular shaft 25 includes an anchor flange 25b which is fixed to the front end wall of the output case portion 10b through mold coupling or the like. The male thread tubular shaft 25 includes a male thread 25a formed in an outer circumferential surface. The female thread tubular shaft 26 includes a female thread 26a formed in an inner circumferential surface. The female thread 26a threadedly engages with the male thread 25a. The final gear 19 is slidably fit to an outer circumferential surface of the female thread tubular shaft 26 via a spline 27. A hollow portion 25c of the male thread tubular shaft 25 continues to the cable outlet 13.

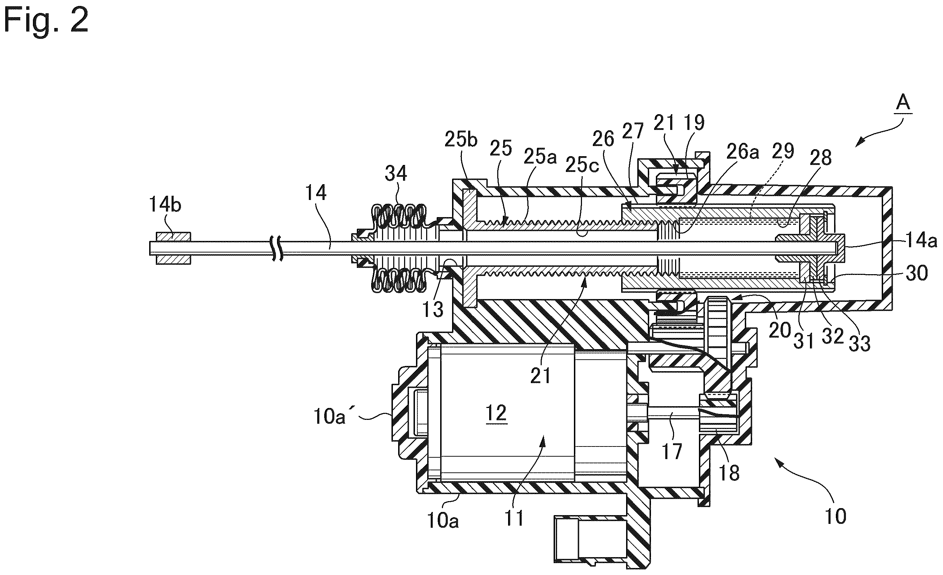

As described above, the male thread tubular shaft 25 is fixed to the output case portion 10b, and the final gear 19 allows the axial movement of the female thread tubular shaft 26 while integrally rotationally driving the female thread tubular shaft 26. Moreover, the female thread tubular shaft 26 changes, through the rotation thereof, a thread engagement position with the male thread tubular shaft 25, thereby being capable of moving in the output case portion 10b in the axial direction over a constant stroke, that is, between a non-operation position (state of Fig. 1) in which the female thread tubular shaft 26 is close to the anchor flange 25b and an operation position (state of Fig. 2) in which the female thread tubular shaft 26 is most apart from the anchor flange 25b. The male thread tubular shaft 25 and the female thread tubular shaft 26 which threadedly engage with each other are in an irreversible relationship in which the relative rotation is not generated by a thrust load.

The male thread 25a of the male thread tubular shaft 25 is formed over a full length of the male thread tubular shaft 25. Meanwhile, the female thread 26a of the female thread tubular shaft 26 is formed in a part on a front end side of the female thread tubular shaft 26, and a grease reservoir 28 surrounding the female thread 26a is formed on the other portion of the inner circumferential surface. Grease 28 is reserved in this grease reservoir 28.

The output cable 14 is connected to the female thread tubular shaft 26 in the following manner.

That is, the output cable 14 is disposed such that the output cable 14 is inserted through the cable outlet 13 of the actuator case 10 and the hollow portion 25c of the male thread tubular shaft 25. A boss of a cable inner terminal 14a in a flange shape is fixed to a rear end portion of the output cable 14 through brazing or the like.

Meanwhile, an annular recessed portion 30 having an annular step portion 30a is provided to an inner circumference of a rear end portion of the male thread tubular shaft 25. In this annular recessed portion 30, an annular support plate 31 in abutment against the annular step portion 30a, a bearing plate 32 supported by this support plate 31, and the cable inner terminal 14a rotatably and slidably supported by this bearing plate 32 are accommodated. A circlip 33 which blocks detachment of the cable inner terminal 14a from the annular recessed portion 30 is locked to an opening portion inner circumferential surface of the annular recessed portion 30. Grease is applied to a periphery of the bearing plate 32. Thus, this bearing plate 32 serves to block the transmission of the rotation of the support plate 31 to the cable inner terminal 14a.

To a part between an outer circumferential portion of the cable outlet 13 of the actuator case 10 and an intermediate portion of the output cable 14, a dust proof boot 34 of a bellows type which covers the output cable 14 in this part is mounted.

A cable outer terminal 14b is fixed to an outer end portion of the output cable 14, and this cable outer terminal 14b is connected to the parking brake mechanism P in a publicly-known drum brake B. Thus, an electric parking brake device according to the present invention is formed of the electric actuator A and the parking brake mechanism P.

Now, an operation of the first embodiment is described.

When the parking brake mechanism P is in a non-braking state, in the electric actuator A, the female thread tubular shaft 26 is held at the non-operation position at which the female thread tubular shaft 26 is close to the anchor flange 25b of the male thread tubular shaft 25 as illustrated in Fig. 1. In the illustrated example, the final gear 19 is to be rotated counterclockwise and clockwise through forward rotation and backward rotation of the motor 12, and the male thread 25a and the female thread 26a which threadedly engage with each other are formed into right-handed threads.

When the motor 12 is driven toward the forward rotation direction in order to operate the parking brake mechanism **P,** this rotation is reduced in speed by the speed reduction gear train 20, and is then transmitted to the final gear 19, to thereby rotationally drive the final gear 19 counterclockwise. Moreover, the counterclockwise rotation of the final gear 19 is transmitted to the female thread tubular shaft 26 via the spline 27, and hence this female thread tubular shaft 26 rotates counterclockwise with respect to the male thread tubular shaft 25 fixed to the actuator case 10 to rectilinearly move in the rear direction, that is, in the direction away from the anchor flange 25b of the male thread tubular shaft 25 while sliding on the spline 27 of the final gear 19. A thrust force of this rectilinear movement is transmitted to the cable inner terminal 14a via the support plate 31 and the bearing plate 32 to pull the output cable 14 to the operation position of Fig. 2, to thereby bring the parking brake mechanism P into the operation state, that is, the braking state.

At this time, the cable inner terminal 14a is supported by the support plate 31 via the bearing plate 32, and hence, even when the support plate 31 rotates together with the female thread tubular shaft 26, this rotation is blocked by the bearing plate 32. Thus, the cable inner terminal 14a does not rotate. In this way, twist of the output cable 14 can be prevented.

When the parking brake mechanism P is brought into the braking state, a sensor (not shown) detects a predetermined load state (for example, a current value) of the motor 12, to thereby stop the forward rotation of the motor 12. After that, the operation state of the parking brake mechanism P is held by the irreversible transmission function of the male thread tubular shaft 25 and the female thread tubular shaft 26 which threadedly engage with each other.

Then, when the motor 12 is rotated backward, the above-mentioned operation progresses in an opposite direction, and the female thread tubular shaft 26 moves backward to the initial non-operation position, to thereby be capable of returning the parking brake mechanism P to the non-braking state.

When the male thread tubular shaft 25 is fixed to the actuator case 10 via the anchor flange 25b as described above, a movable portion which causes slapping sound at the time of the forward rotation and the backward rotation of the motor 12 is only the slidingly fitting portion by the spline 27 between the final gear 19 and the female thread tubular shaft 26 in the motion conversion mechanism 21. Moreover, this spline 27 is provided to the outer circumferential surface of the female thread tubular shaft 26 having the largest diameter in the motion conversion mechanism 21, and hence play between the final gear 19 and the female thread tubular shaft 26 in the rotational direction, which is caused by a sliding gap of the spline 27, is small. Thus, the slapping sound caused by this play is extremely small. As described above, the quietness of the electric actuator A can be achieved.

Moreover, in the non-operation state of the electric actuator A as illustrated in Fig. 1, the grease reservoir 28 in the female thread tubular shaft 26 surrounds the male thread 25a of the male thread tubular shaft 25, to thereby maintain the male thread 25a in the lubricated state, and hence the entire threadedly engaged portion between the male thread 25a and the female thread 26a can be lubricated as the female thread tubular shaft 26 rotates, to thereby be capable of achieving a smooth threaded engagement rotation of the female thread tubular shaft 26.

Moreover, the output cable 14 passes through the hollow portion 25c of the male thread tubular shaft 25, to thereby connect the cable inner terminal 14a fixed to the inner terminal portion of this output cable 14 to the inner end portion of the female thread tubular shaft 26, and hence the output cable 14 can be connected to the female thread tubular shaft 26 without interference by the male thread tubular shaft 25, to thereby be capable of increasing space efficiency.

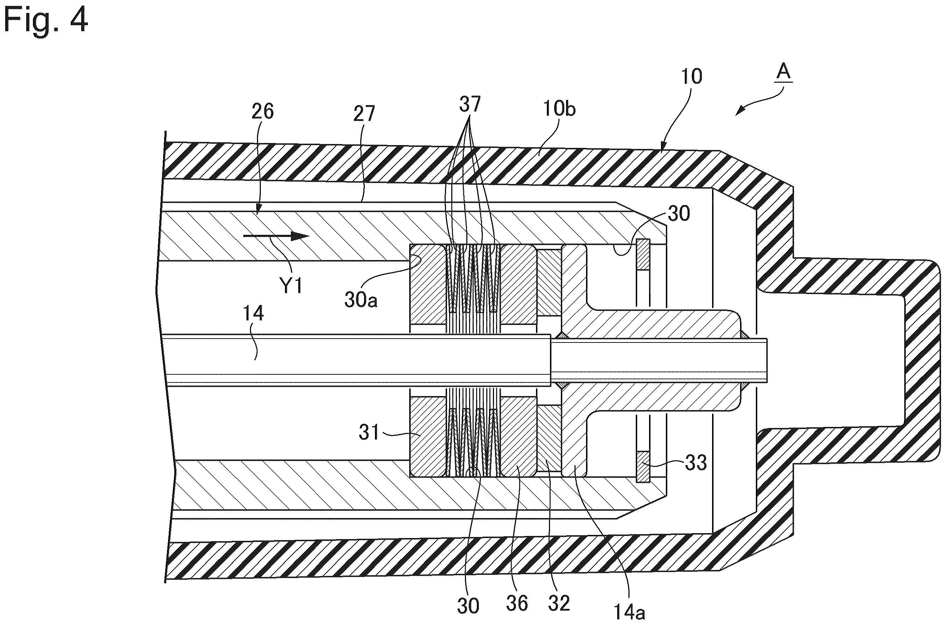

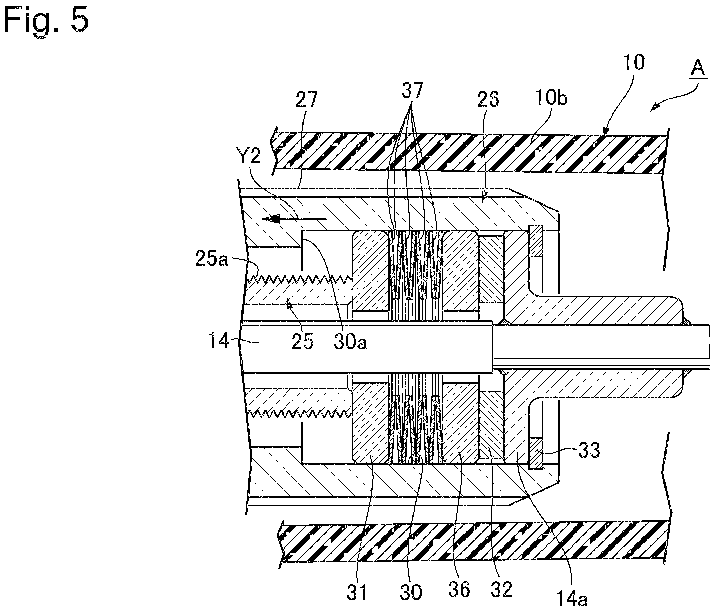

Now, a second embodiment of the present invention is described with reference to Fig. 4 and Fig. 5.

In the annular recessed portion 30 of the rear end portion of the female thread tubular shaft 26, the first support plate 31, a disc spring 37 group, a second support plate 36, the bearing plate 32, and the cable inner terminal 14a are sequentially accommodated from the front side, and the circlip 33 which prevents detachment thereof from the annular recessed portion 30 is locked to a rear end portion of the annular recessed portion 30. The disc spring 37 group is formed by stacking a plurality of disc springs 37 while orientations of tapered surfaces thereof are alternately switched.

The other configuration is the same as that in the first embodiment. Thus, portions corresponding to the configurations in the first embodiment are denoted by the same reference symbols in Fig. 4 and Fig. 5, and description thereof is omitted.

Thus, as illustrated in Fig. 4, when the female thread tubular shaft 26 is first driven toward the operation position (toward an arrow Y1) through the forward rotation of the motor 12 (Fig. 1) in order to bring the parking brake mechanism P (Fig. 1) into the braking state, and hence the pulling force applied to the output cable 14 exceeds a set load of the disc spring 37 group, the disc spring 37 group is being compressed between the first support plate 31 and the second support plate 36. When the female thread tubular shaft 26 reaches the operation position at which the parking brake mechanism P is brought into the braking state, the disc spring 37 group is sufficiently compressed, and hence a predetermined repulsive force is accumulated. Thus, when looseness of the parking brake mechanism P and slack of the output cable 14 occur after the drive of the motor 12 is stopped, the looseness and the slack are suppressed by the repulsive force of the disc spring 37 group, to thereby be capable of securing a stable braking state of the parking brake mechanism P.

After that, in the process of the drive of the female thread tubular shaft 26 toward the non-operation position (toward an arrow Y2) by the backward rotation of the motor 12 in order to return the parking brake mechanism P from the operation state to the non-operation state as illustrated in Fig. 5, the parking brake mechanism P returns to the non-operation state, and the disc spring 37 group is temporarily brought into a free state. As a result, the cable inner terminal 14a abuts against the circlip 33, but the female thread tubular shaft 26 is further moved backward. As a result of the backward movement of the female thread tubular shaft 26, the first support plate 31 presses a distal end surface of the immovable male thread tubular shaft 25, and the disc spring 37 group is compressed between the first support plate 31 and the circlip 33 by a reaction force thereof. When the load on the motor 12 caused by generation of the compression reaction force reaches a predetermined value (current value), this predetermined value is detected as a stop signal by the sensor (not shown), to thereby stop the backward rotation of the motor 12. After that, the compression load acting on the disc spring 37 group also acts on the output cable 14, to thereby be capable of eliminating play from the output cable 14.

The embodiments of the present invention have been described above, but the present invention is not limited to the above-mentioned embodiments, and various design changes may be made without departing from the present invention described in the scope of claims.

For example, the electric actuator A can also be used for operation of a parking brake mechanism in a disk brake. Moreover, the disc spring 37 group can be replaced by a compression coil spring.

The present application claims a priority based on Japanese Patent Application No. 2022-166512 filed on October 17, 2022. All disclosed contents including Specification, Scope of Claims, Drawings, and Abstract of Japanese Patent Application No. 2022-166512 filed on October 17, 2022 are incorporated herein by reference in their entirety.

### REFERENCE SIGNS LIST

- A: electric actuator
- P: parking brake mechanism
- 10: actuator case
- 12: electric driving source (motor)
- 14: transmission member (output cable)
- 21: motion conversion mechanism
- 25: first member (male thread tubular shaft)
- 25a: male thread
- 26: second member (female thread tubular shaft)
- 26a: female thread
- 28: lubricant reservoir (grease reservoir)
- 32: bearing (bearing plate)
- 37: elastic member (disc spring)

## Claims

1. An electric actuator, comprising:
an electric driving source configured to generate a rotational motion as a driving force; and
a motion conversion mechanism configured to convert the rotational motion to a rectilinear motion,
wherein the motion conversion mechanism includes:
a first member configured to be blocked to execute a rotational motion and a rectilinear motion; and
a second member configured to engage with the first member to relatively rotate with respect to the first member, to thereby generate a rectilinear motion, and
wherein the second member is configured to be rotationally driven by the driving force of the electric driving source.

2. The electric actuator according to claim 1, wherein the first member and the second member engage with each other through thread engagement.

3. The electric actuator according to claim 2, wherein a lubricant reservoir that a thread portion of the first member faces is provided to the second member.

4. The electric actuator according to any one of claims 1 to 3, wherein the first member is fixed to an actuator case that accommodates the motion conversion mechanism.

5. An electric parking brake device, comprising a parking brake mechanism configured to be brought into a braking state through an operation of an electric actuator,
wherein the electric actuator includes an electric driving source configured to generate a rotational motion as a driving force, and a motion conversion mechanism configured to convert the rotational motion to a rectilinear motion,
wherein the motion conversion mechanism includes a first member configured to be blocked to execute a rotational motion and a rectilinear motion, and a second member configured to relatively rotate with respect to the first member, to thereby generate a rectilinear motion, and
wherein the second member is configured to be rotationally driven by the driving force of the electric driving source, to thereby operate the parking brake mechanism.

6. The electric parking brake device according to claim 5,
wherein the second member is connected to the parking brake mechanism via a transmission member, and
wherein a bearing configured to allow a relative rotation between the second member and the transmission member is interposed therebetween.

7. The electric parking brake device according to claim 6, wherein a hollow portion that allows the transmission member to be inserted therethrough is provided to the first member.

8. The electric parking brake device according to claim 6 or 7, wherein the second member and the transmission member are connected to each other via an elastic member.
